(19) Europäisches Patentamt
European Patent Office
Office européen des brevets

(11) **EP 1 816 581 A1**

(12) **EUROPEAN PATENT APPLICATION**

(43) Date of publication:
**08.08.2007 Bulletin 2007/32**

(51) Int Cl.:
***G06K 7/00*** *(2006.01)*

(21) Application number: **06022620.6**

(22) Date of filing: **30.10.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **17.01.2006 KR 20060004792**

(71) Applicant: **Integrant Technologies Inc.
Gyeonggi-do 463-810 (KR)**

(72) Inventors:
  • **Lee, Jeiyoung
    Seoul (KR)**

  • **Yang, Kyoung On
    Gunpo-si,
    Gyeonggi-do (KR)**
  • **Kim, Bonkee
    Bundang-gu,
    Seongnam-si,
    Gyeonggi-do (KR)**
  • **Kim, Bo-Eun
    Giheung-eup,
    Yongin-si,
    Gyeonggi-do (KR)**

(74) Representative: **Zech, Stefan Markus et al
Meissner, Bolte & Partner GbR
Postfach 86 06 24
81633 München (DE)**

(54) **RFID reader and RFID system**

(57)     Provided are a radio frequency identification (RFID) reader and a RFID system. Particularly, the RFID reader uses a listen before talk (LBT) mode to identify.

A reader for RFID comprises a data path block receiving a tag data signal, a search path block receiving a channel search signal, and a path selection block selecting one of the data path block and the search path block.

**FIG. 1**

EP 1 816 581 A1

## Description

This nonprovisional application claims priority under 35 U.S.C. § 119(a) on Patent Application No. 10-2006-0004792 filed in Republic of Korea on Janaury 17, 2006, the entire contents of which are hereby incorporated by reference.

## BACKGROUND OF THE INVENTION

### Field of the Invention

The present invention relates to radio frequency identification (RFID), and more particularly, to a RFID reader and a RFID system, wherein the RFID reader, which uses a listen before talk (LBT) mode.

### Description of the Background Art

Bar codes have been commonly and widely used to identify books, records or other related items in libraries and consumer items in supermarkets. Although bar codes can be readily implemented at low cost, they usually have a short read distance and are not reusable. Also, when reading, a reader has to be precisely placed on a bar code-printed surface, and if bar codes are damaged, it is impossible to read the bar codes. Thus, an RFID system is developed to overcome these limitations.

A typical RFID system can read and write wirelessly. Thus, a direct contact or scanning within a visible band is not necessary. Also, many books, records or other items can be identified at the same time in any position or direction. Since electronic tags used in the RFID system have a nearly permanent lifetime, it has been highlighted as an effective tool to establish a ubiquitous system.

An RFID system identifies identification (ID) information on electronic tags that are adhered to items via wireless telecommunications. Particularly, RFID is a combined technology of using electromagnetism or static electricity coupling within a frequency of an electromagnetic spectrum.

Due to RFID standardization, decrease in a unit cost and a widened readable distance, an RFID system has been broadly used in various industrial fields. An antenna, a transceiver and a transponder, which is an electronic tag, are common elements of a typical RFID system.

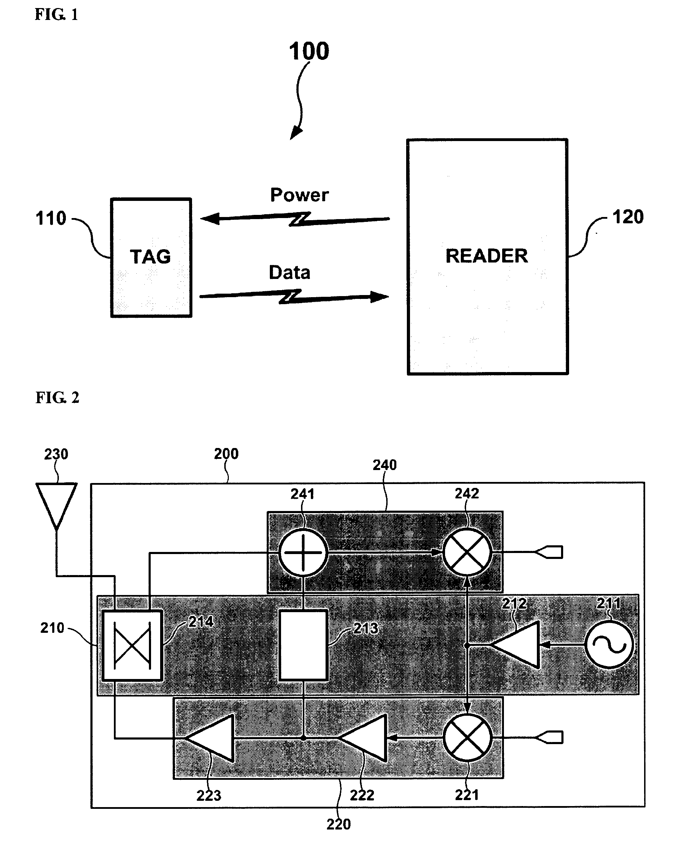

A typical RFID system will be described with reference to FIG. 1 herein below.

FIG. 1 illustrates the configuration of a typical RFID system 100.

The RFID system 100 includes a reader 120 for RFID and an electronic tag 110 with a built-in antenna (not shown).

The reader 120 for RFID continuously sends out electromagnetic waves with a certain frequency.

The electronic tag 110 is wirelessly supplied with power when displaced within a frequency operation range of the reader 120 and becomes activated.

The reader 120 for RFID uses a radio frequency to transmit a signal for activating the electronic tag 110. When the electronic tag 110 is activated, data incorporated within the electronic tag 110 are transmitted to the reader 120 through the antenna.

The electronic tag 110 activated by the supplied power waits for an instruction from the reader 120. If a correct instruction is received, data are transmitted to the reader 120 in response to the receipt.

The reader 120 may transmit data based on an LBT mode and a frequency hopping spread spectrum (FHSS) mode.

An LBT mode is used to avoid an interference between the readers 120. Even though the readers 120 are apart several kilometers away from each other, they may affect each other because the reader 120 has a longer read distance than the electronic tag 110. More specifically, according to the LBT mode, the reader 120 scans a channel that is used prior to the transmission, and transmits data using a channel that is not used to thereby minimize the interference.

That is, the LBT mode is a method of detecting the channel that is not used during the scanning.

Also, the reader uses a direct conversion method to minimize the power consumption and the size of the reader. The direct conversion method needs to remove direct current (DC) offset.

Also, the reader uses a direct conversion method to minimize the power consumption and the size of the reader. But, the direct conversion method needs a removal of direct current (DC) offset from an input signal.

FIG. 2 illustrates the configuration of a typical RFID reader 200.

The RFID reader 200 includes a common circuit block 210, a power path block 220 and a data path block 240.

When the RFID reader 200 scans a frequency signal received within a certain range to detect a channel that is not used, various frequencies are received through the data path block 240.

Transmitted power and received tag data signals and channel search signals at the RFID reader 200 are transmitted through a single antenna 230.

A coupler 214 and a leakage signal remover 213 are included in the common circuit block 210 to perform the transmission using the same antenna 230.

The RFID reader 200 performs the transmission and the receipt at the same time, and this characteristic of the RFID reader 200 is called a full duplex mode.

The transmission and the receipt are performed using the same antenna 230.

More particularly, using the coupler 214, ports at edge portions of the coupler 214 are isolated from each other in order for the antenna 230 to transmit and receive power transmitted through the power path block 220 and tag data signals inputted to the data path block 240.

Also, the leakage signal remover 213 removes a leakage signal inputted to the data path block 240.

However, due to the coupler 214, an insertion loss may be generated in proportionate to a coupling coefficient, and this insertion loss may cause decrease in sensitivity of the RFID reader 200 and increase noise figure.

## SUMMARY OF THE INVENTION

Accordingly, the present invention is directed to solve at least the problems and disadvantages of the background art.

The present invention is directed to provide a RFID reader advantageous of minimizing an internal loss so as to allow ease identification of low power frequencies transmitted from an electronic tag.

According to one embodiment of the present invention, there is provided a reader for RFID, wherein the reader performs an LBT mode, the reader comprising, a data path block receiving a tag data signal, a search path block receiving a channel search signal, and a path selection block selecting one of the data path block and the search path block.

Consistent with the embodiment of the present invention, the search path block may comprise an amplifier amplifying the channel search signal.

Consistent with the embodiment of the present invention, the search path block may comprise an insulating switch configured to isolate the search path block and the data path block from each other.

Consistent with the embodiment of the present invention, the reader for RFID may comprise a power path block transmitting a power signal.

Consistent with the embodiment of the present invention, the channel search signal and the power signal may be transmitted and received through a single antenna coupled with the reader.

According to another embodiment of the present invention, there is provided a system for RFID, comprising a RFID reader, and an electronic tag.

Detailed features of other embodiments will be provided in the following section of the detailed description of embodiments and the drawings.

Various features and advantages of the present invention and many approaches to achieve those advantages will now be described more fully with reference to the accompanying drawings.

The present invention will be described more fully with reference to the accompanying drawings, in which embodiments of the invention are shown. This invention may, however, be embodied in many different forms and should not be construed as being limited to the embodiments set forth herein; rather, these embodiments are provided so that this disclosure will be thorough and complete, and will fully convey the concept of the invention to those skilled in the art. In the drawings, the same reference numerals in different drawings represent the same element. Like reference numerals denote like elements even in different drawings.

## BRIEF DESCRIPTION OF THE DRAWINGS

The accompanying drawings, which are comprised to provide a further understanding of the invention and are incorporated in and constitute a part of this specification, illustrate embodiments of the invention and together with the description serve to explain the principles of the invention. In the drawings:

FIG. 1 illustrates the configuration of a typical RFID system;

FIG. 2 illustrates the configuration of a typical RFID reader;

FIG. 3 illustrates the configuration of a RFID reader according to an embodiment of the present invention; and

FIG. 4 illustrates a graph of simulation results to show a comparison between noise figures of the embodied RFID reader when executing a normal operation and an LBT operation.

**DETAILED DESCRIPTION OF EMBODIMENTS**

A RFID reader and RFID system according to various embodiments of the present invention will be described in a more detailed manner with reference to the attached drawings.

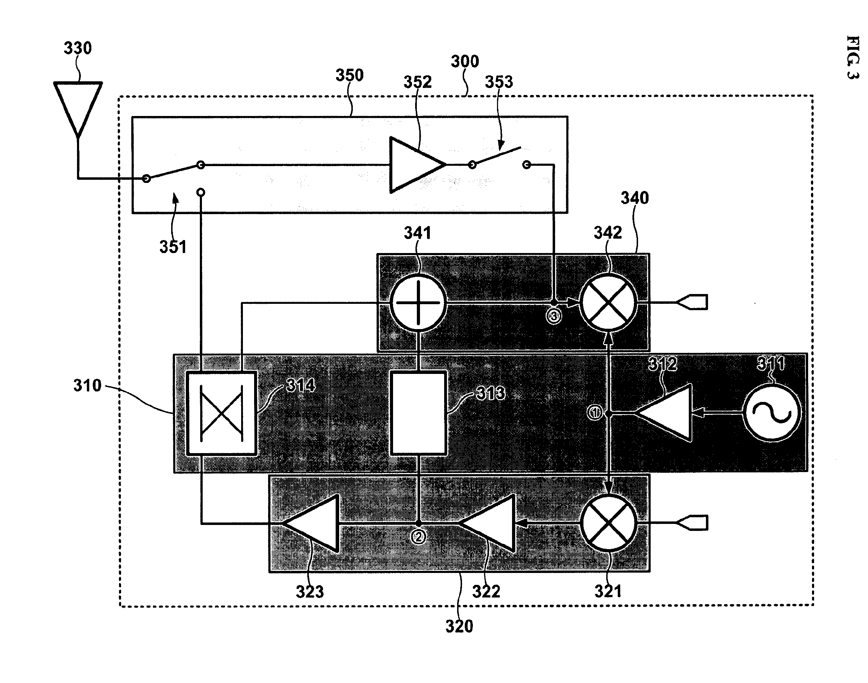

FIG. 3 illustrates the configuration of a RFID reader 300 according to an embodiment of the present invention.

The RFID reader 300 includes a common circuit block 310, a power path block 320, a data path block 340, and a search path block 350.

An antenna 330 that sends out or receives signals that are transmitted and received at the RFID reader 300 is included additionally.

The common circuit block 310 includes a frequency oscillator 311, an oscillated frequency amplifier 312, a leakage signal remover 313, and a coupler 314.

The power path block 320 includes an up-conversion mixer 321, a driving amplifier 322 and a power amplifier 323.

The data path block 340 includes an adder 341 and a down-conversion mixer 342.

The search path block 350 includes a selective switch 351, an amplifier 352 and an insulating switch 353.

An output terminal of the frequency oscillator 311 is coupled to an input terminal of the oscillated frequency amplifier 312. An output terminal of the oscillated frequency amplifier 312 is coupled to a first node o,1. A transmission signal is inputted to a first input terminal of the up-conversion mixer 321. A second input terminal of the up-conversion mixer 321 is coupled to the first node o,1,

An output terminal of the up-conversion mixer 321 is coupled to an input terminal of the driving amplifier 322. An output terminal of the driving amplifier 322 is coupled to a second node o,2. An input terminal of the power amplifier 323 is coupled to the second node o,2. An output terminal of the power amplifier 323 is coupled to a first port of the coupler 314. A second port of the coupler 314 is coupled to a third terminal of the selective switch 351.

A first terminal of the selective switch 351 is coupled to one terminal of the antenna 330. A third port of the coupler 314 becomes a first input terminal of the adder 341. A second input terminal of the adder 341 is coupled to one terminal of the leakage signal remover 313. The other terminal of the leakage signal remover 313 is coupled to the second node o,2. An output terminal of the adder 341 is coupled to a third node o,3.

A first input terminal of the down-conversion mixer 342 is coupled to the third node o,3. A second input terminal of the down-conversion mixer 342 is coupled to the first node o,1. A second terminal of the selective switch 351 is coupled to an input terminal of the amplifier 352. An output terminal of the amplifier 352 is coupled to one terminal of the insulating switch 353. The other terminal of the insulating switch 353 is coupled to the third node o,3,

The RFID reader 300 receives various frequencies through the data path block 340. The RFID reader 300 scans a frequency signal received within a certain range using the antenna 330 to detect a channel that is not used.

Although not illustrated, an electronic tag sends out a tag data signal, and the RFID reader 300 receives the tag data signal.

The coupler 314 is used to process power of the power path block 320 and the tag data signal of the data path block 340 using the same antenna 330.

The coupler 314 can perform the transmission and the receipt through coupling the antenna 330.

The leakage signal remover 313 removes the power of the power path block 320 supplied to the tag data signal of the data path block 340.

Also, the RFID reader 300 is supported with an LBT mode function that allows selecting a usable channel out of occupied channels by monitoring whether adjacent channels to a target channel are used before the RFID reader 300 transmits or receives the tag data signal.

Therefore, the search path block 350 is added to separate the power path block 320 and the data path block 340 from each other during the execution of the LBT mode. Configuring the search path block 350 in a circuit reduces an insertion loss, which often occurs when using the coupler 314.

That is, when the LBT mode function needs to be performed at the search path block 350, the selective switch 351 and the insulating switch 353 are simultaneously switched, constructing a search path.

After this operation, the coupler 314 does not allow inputting a signal received at the antenna 330 to the power path block 320 and the data path block 340.

As the selective switch 351 selects the search path, a channel search signal received from the electronic tag (not shown) through the antenna 330 is amplified by the amplifier 352, which is particularly for low noise amplification. Afterwards, the amplified channel search signal is inputted to the down-conversion mixer 342 through the insulating switch 353.

Due to the above configuration, when the RFID reader 300 performs the normal transmission and receipt through the antenna 330, the selective switch 351 does not select the search path, and the insulating switch 353 is also opened, so that the search path is separated. When the LBT mode is executed, the selective switch 351 is switched to select the search path, and the insulating switch 353 is electrically connected with each other to activate the search path.

The RFID reader 300 according to the present invention is improved in sensitivity, and the improved sensitivity can be defined as follows.

$$S = CPL + loss_{sw} + (NF_{IC1} - NF_{IC2}) \qquad Eq.\ 1$$

Herein, S represents the sensitivity of the RFID reader 300, wherein the sensitivity is measured in decibels (DB) and CPL represents a coupling coefficient by the coupler 314 and $loss_{sw}$ represents an insertion loss measured in decibels (DB) by the selective switch 351 and $NF_{IC1}$ represents a noise figure measured in decibels (DB) when performing a typical mode and Lastly, $NF_{IC2}$ represents a noise figure measured in decibels (DB) when the search path is generated.

Assuming that a channel bandwidth of approximately 200 KHz, a minimum detectable C/N ratio of approximately 12 dB, a coupling coefficient of approximately 15 dB, and a loss of approximately 2 dB occurring at an input terminal including a filter, the typical RFID reader without the search path executes normal operation has a sensitivity of approximately -70 dBm. The sensitivity of the typical RFID reader can be defined as follows.

$$S = -174 dBm/Hz + 10\log(200KHz) + requiredC/N + (NF_{IC1} + loss)$$

$$= -174 + 53 + 12 + (NF_{IC1} + loss)$$

$$= -109 + (NF_{IC1} + 17)$$

$$= -70\ dBm$$

$$Eq.\ 2$$

Therefore, when a system is designed to have a noise figure of approximately 22 dB or less, the typical RFID reader without the search path has a sensitivity of approximately -70 dBm.

When the RFID reader without the search path executes the LBT mode, the sensitivity thereof is defined as follows.

$$S = -174 dBm/Hz + 10\log(200KHz) + requiredC/N + (NF_{IC1} + loss)$$

$$= -174 + 53 + 10 + (NF_{IC1} + loss)$$

$$= -111 + (22 + 17)$$

$$= -72\ dBm$$

$$Eq.\ 3$$

As shown, the sensitivity of the typical RFID reader executing the LBT mode decreases by approximately 2 dB as compared with the sensitivity obtained during the normal operation.

When the RFID reader 300 according to the present invention executes the LBT mode, the sensitivity of the RFID reader 300 is defined as follows.

Assuming that a detectable C/N ratio of the RFID reader 300 is approximately 10 dB, an insertion loss of the selective switch 351 is approximately 1 dB, and an input terminal such as a filter has a loss of approximately 2 dB, the sensitivity of the RFID reader 300 is defined as follows.

$$S = -174 \text{dBm/Hz} + 10\log(200\text{KHz}) + required\text{C/N} + (NF_{IC2} + loss)$$

$$= -174 + 53 + 10 + (NF_{IC2} + loss)$$

$$= -111 + (NF_{IC2} + 3)$$

$$= -108 + NF_{IC2} \qquad\qquad \text{Eq. } 4$$

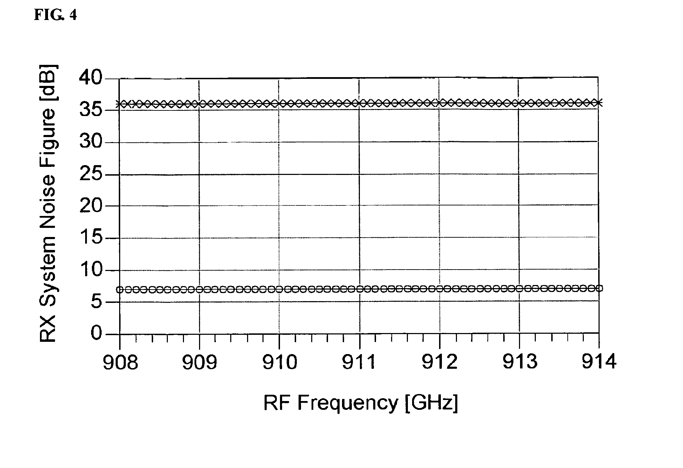

If a noise figure due to the amplifier 352 is approximately 5 dB, the RFID reader 300 has a sensitivity of approximately -103 dBm. This result indicates that the sensitivity of the RFID reader 300 is improved to a greater extent as compared with the sensitivity of the typical RFID reader. FIG. 4 illustrates a graph of simulation results to show a comparison between noise figures of the embodied RFID reader 300 when executing a normal operation and an LBT operation.

In the graph exhibiting the comparison between the two noise figures of the normal operation and the LBT operation, the horizontal (X) axis and the vertical (Y) axis represent a RFID frequency and a noise figure of a RFID system, respectively.

Particularly, the illustrated graph is obtained under the assumption that the selective switch 351 has an insertion loss of approximately 1 dB, a gain due to the amplifier 352 is approximately 15 dB, and a noise figure is approximately 3 dB.

Herein, the red line represents a noise figure of the normal operation. On the other hand, the blue line represents a noise figure of the RFID reader 300 with the search path.

As illustrated, the noise figure of the RFID reader 300 with the search path is improved more highly than that of the RFID reader 300 that is not configured with the search path for the normal operation.

The RFID reader 300 can have an improved noise figure in overall by configuring additionally the search path to the RFID reader 300.

According to various embodiments of the present invention, those received low power frequencies from electronic tags can be easily identified by using a reader that can minimize an internal loss.

The invention being thus described, it will be obvious that the same may be varied in many ways. Such variations are not to be regarded as a departure from the spirit and scope of the invention and all such modifications as would be obvious to one skilled in the art are intended to be included within the scope of the following claims.

**Claims**

1. A reader for RFID (radio frequency identification), wherein the reader performs an LBT (listen before talk) mode, the reader comprising:

   a data path block receiving a tag data signal;
   a search path block receiving a channel search signal; and
   a path selection block selecting one of the data path block and the search path block.

2. The reader of claim 1, wherein the search path block comprises an amplifier amplifying the channel search signal.

3. The reader of claim 1, wherein the search path block comprises an insulating switch configured to isolate the search path block and the data path block from each other.

4. The reader of claim 1, further comprising a power path block transmitting a power signal.

5. The reader of claim 4, wherein the tag data signal, the channel search signal and the power signal are transmitted and received through a single antenna coupled with the reader.

6. A system for RFID comprising:

   a RFID reader claimed in claim 1; and
   an electronic tag.

FIG. 1

**100**

110

TAG

Power

Data

READER

120

FIG. 2

230

200

240

241

242

210

214

213

212

211

220

223

222

221

**FIG. 3**

FIG. 4

European Patent
Office

**EUROPEAN SEARCH REPORT**

Application Number

EP 06 02 2620

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/231367 A1 (BELLANTONI JOHN V [US] BELLANTONI JOHN VINCENT [US]) 20 October 2005 (2005-10-20) * paragraph [0013] * * paragraph [0053] * * paragraph [0083] - paragraph [0086] * * figures 15A,15B * ----- | 1-6 | INV. G06K7/00 |
| A | US 2005/190098 A1 (BRIDGELALL RAJ [US] ET AL BRIDGELALL RAJ [US] ET AL) 1 September 2005 (2005-09-01) * paragraph [0046] * * paragraph [0059] - paragraph [0065] * * figure 6 * ----- | 1-6 | |
| A | EP 0 596 521 A2 (TEXAS INSTRUMENTS DEUTSCHLAND [DE]) 11 May 1994 (1994-05-11) * abstract * * column 8, line 18 - line 24 * * figures 1,2 * ----- | 1-6 | |
| | | | TECHNICAL FIELDS SEARCHED (IPC) |
| | | | G06K |

The present search report has been drawn up for all claims

| Place of search | Date of completion of the search | Examiner |
|---|---|---|
| Munich | 13 June 2007 | Berger, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 02 2620

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2007

| Patent document cited in search report | | | Publication date | Patent family member(s) | | | Publication date |
|---|---|---|---|---|---|---|---|
| US 2005231367 | A1 | | 20-10-2005 | NONE | | | |
| US 2005190098 | A1 | | 01-09-2005 | AU<br>CA<br>EP<br>WO | 2005218459<br>2557341<br>1721187<br>2005085899 | A1<br>A1<br>A1<br>A1 | 15-09-2005<br>15-09-2005<br>15-11-2006<br>15-09-2005 |
| EP 0596521 | A2 | | 11-05-1994 | DE<br>DE<br>JP<br>US | 69316958<br>69316958<br>7030458<br>5455575 | D1<br>T2<br>A<br>A | 19-03-1998<br>13-08-1998<br>31-01-1995<br>03-10-1995 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 1020060004792 A